Europäisches Patentamt

European Patent Office

Office européen des brevets

(19)

(11) Numéro de publication: **0 044 013**
**B1**

# FASCICULE DE BREVET EUROPEEN

(12)

(45) Date de publication du fascicule du brevet:
06.07.83

(21) Numéro de dépôt: **81105231.5**

(22) Date de dépôt: **06.07.81**

(51) Int. Cl.³: **F 23 D 13/38,** F 24 C 3/12,
F 16 K 31/53, F 23 N 1/00

(54) **Dispositif de commande de brûleur à gaz.**

(30) Priorité: **11.07.80 FR 8015483**

(43) Date de publication de la demande:
**20.01.82 Bulletin 82/3**

(45) Mention de la délivrance du brevet:
**06.07.83 Bulletin 83/27**

(84) Etats contractants désignés:
**BE CH DE FR GB IT LI NL**

(56) Documents cités:
**FR-A-2 421 321**
**US-A-1 756 650**
**US-A-2 984 127**
**US-A-3 299 941**
**US-A-3 809 055**

(73) Titulaire: **COMPAGNIE EUROPEENNE POUR
L'EQUIPEMENT MENAGER "CEPEM" Société anonyme
dite:, 12, rue de la Baume, F-75008 Paris (FR)**

(72) Inventeur: **Maitenaz, Paul, 22, Les Blancs Bouleaux,
Ardon F-45160 Olivet (FR)**
Inventeur: **Bardin, André, 22, place du Canada,
F-45140 Saint Jean de la Ruelle (FR)**

(74) Mandataire: **Weinmiller, Jürgen et al, Zeppelinstrasse 63,
D-8000 München 80 (DE)**

## Dispositif de commande de brûleur à gaz

L'invention concerne un dispositif de commande de brûleur à gaz pour appareils de cuisson domestique comportant un dispositif de démultiplication à commande manuelle agissant sur un robinet de brûleur à grand angle de rotation et à variation de débit proche de la linéarité pour l'alimentation du brûleur entre le débit maximal et le débit minimal, ledit dispositif de démultiplication comprenant une couronne fixe à denture intérieure rendue solidaire du corps du robinet, une platine solidaire de l'axe du robinet et supportant des satellites coopérant d'une part avec la denture de la couronne fixe et d'autre part avec un engrenage à pignon denté solidaire de la manette de commande du brûleur (voir par exemple le document FR-A-2 421 321).

Le réglage du débit des brûleurs de table des appareils de cuisson à gaz à usage domestique est relativement imprécis en raison de la faible rotation des tournants des robinets de commande permettant de passer du plein débit au débit réduit.

En effet, avec les robinets ordinaires cette rotation est limitée à 70° et la variation du débit n'étant pas linéaire, la précision du réglage est assez faible dès que l'on réduit le débit. Une amélioration sensible est apportée par les robinets dits »progressifs« dont la rotation est portée de 70 à 130° avec une variation de débit plus proche de la linéarité.

Lorsque l'on utilise ces robinets avec un brûleur à très grande souplesse, c'est-à-dire dont le rapport entre le plein débit et le débit réduit admissibles peut atteindre 12 à 13, au lieu de 6 environ dans un brûleur normal, cette précision devient tout à fait insuffisante.

Pour obtenir un réglage précis des brûleurs d'appareils de cuisson domestique, on connaît des dispositifs de commande à démultiplication mais ces dispositifs ont le désavantage d'une manoeuvre lente lorsqu'on veut changer le débit brusquement (arrêt de cuisson avant débordement par exemple).

Le but de la présente invention est d'éviter ces inconvénients en offrant à la fois la précision du réglage à démultiplication et la rapidité du réglage grossier.

L'invention a pour objet un dispositif de commande de brûleur à gaz pour appareils de cuisson domestique comportant un dispositif de démultiplication à commande manuelle agissant sur un robinet de brûleur à grand angle de rotation et à variation de débit proche de la linéarité pour l'alimentation du brûleur entre le débit maximal et le débit minimal, ledit dispositif de démultiplication comprenant une couronne fixe à denture intérieure rendue solidaire du corps du robinet, une platine solidaire de l'axe du robinet et supportant des satellites coopérant d'une part avec la denture de la couronne fixe et d'autre part avec un engrenage à pignon denté solidaire de la manette de commande du brûleur, ledit dispositif de commande étant caractérisé par le fait que la platine est solidarisée par l'intermédiaire des axes des satellites à un carter dont la paroi cylindrique est disposée à l'extérieur de la couronne et permet une action non démultipliée sur le robinet.

Selon l'invention la platine supportant des satellites est disposée dans une enceinte définie par le carter mobile selon un mouvement non démultiplié et la couronne fixe.

Selon un mode de réalisation conforme à l'invention le bouton de manoeuvre à commande démultipliée repose sur le carter assurant la commande non démultipliée.

Avantageusement le bouton de manoeuvre peut comprendre un obturateur transparent permettant la vision d'un index solidaire du mouvement de rotation de l'axe du robinet et se déplaçant en regard de repères ou graduations portés par l'obturateur.

Le brûleur est à grande souplesse c'est-à-dire présente un rapport élevé entre le débit maximal et le débit minimal admissibles.

L'invention va être précisée par la description donnée ci-après d'un mode préféré de réalisation en référence au dessin annexé dans lequel:

La figure 1 est une vue en élévation, d'un dispositif de commande à démultiplication d'un brûleur selon l'invention.

Les figures 1A, 1B sont des vues agrandies partiellement en coupe de la figure 1.

La figure 2 est une vue en coupe du dispositif suivant la ligne II-II de la figure 1A.

La figure 3 représente une variante du dispositif selon la figure 1.

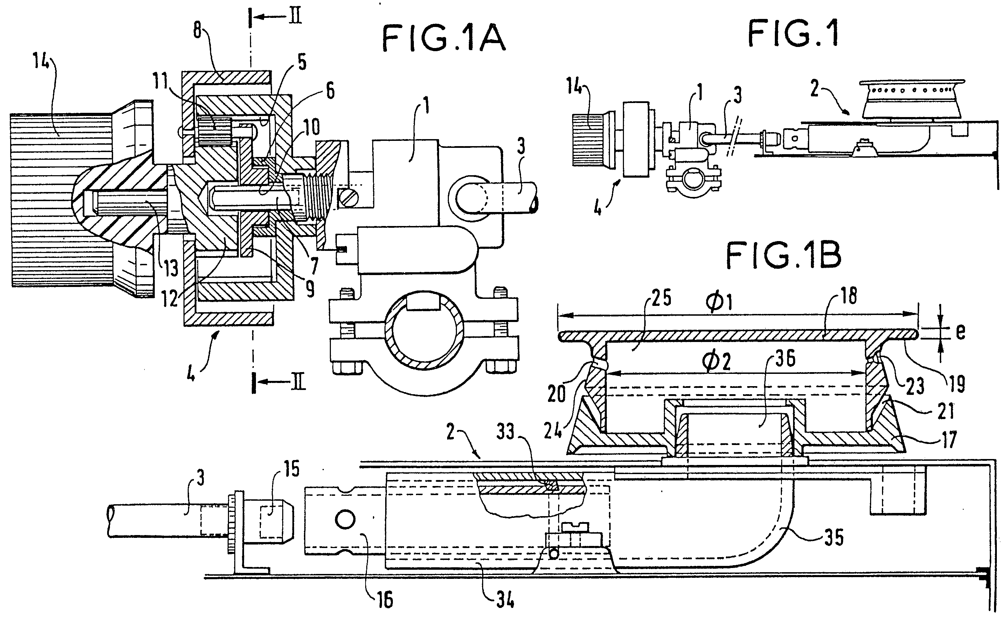

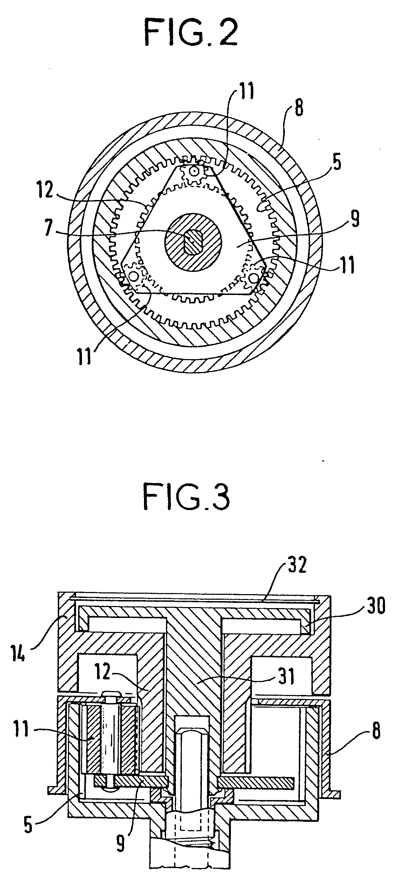

Comme représenté sur les figures 1, 1A, 1B et 2 un robinet 1 du type progressif, fixé sur une rampe à gaz, alimente un brûleur 2 à grande souplesse par l'intermédiaire d'un tube 3. Le robinet est du type à grand angle de rotation, 130° par exemple, avec une variation de débit proche de la linéarité. Le robinet 1 est commandé par un dispositif démultiplicateur 4 qui comprend:

— une couronne fixe 5 à denture intérieure rendue solidaire du corps de robinet 1 par l'intermédiaire d'un palier 6 de l'axe de commande 7 du tournant du robinet,

— un carter 8 à l'intérieur duquel est rapportée une platine 9 dont l'ouverture centrale 10 coopère avec l'axe 7 et fixée au carter par l'intermédiaire des axes de trois satellites 11 intercalés entre la couronne fixe 5 et un pignon denté 12 dont l'axe 13 reçoit un bouton de commande 14. La liaison entre les axes des satellites 11 et la platine 9 ou le carter 8 peut être réalisée par sertissage ou tout autre procédé équivalent.

Les diamètres primitifs du pignon et de la couronne sont déterminés en fonction du rapport de démultiplication désiré et celui des satellites en résulte.

Si le diamètre primitif de la couronne est égal à 1,5 fois celui du pignon, l'angle de rotation de la manette sera de 2,5 fois celui du tournant du robinet.

La rotation du tournant du robinet pourra être visualisée par un index solidaire du carter donc de l'axe du robinet.

La platine 9 étant solidaire de l'axe du robinet 7, le carter 8 est également solidaire dudit axe 7 du fait de la liaison au niveau des axes des satellites 11. La paroi cylindrique du carter 8 étant disposée à l'extérieur de la couronne fixe 5, elle est accessible pour l'utilisateur et permet de ce fait de réaliser rapidement un réglage grossier, qui est ensuite affiné par action sur le bouton de commande 14. Comme il apparaît clairement sur la figure 1A, la platine 9 supportant les satellites 11 est disposée dans une enceinte définie par le carter mobile 8 et la couronne fixe 5.

Le brûleur 2 comporte un injecteur 15 placé devant un venturi horizontal 16 monté coulissant par l'intermédiaire d'un joint 33, dans une pipe 34 constituée essentiellement par un tube horizontal. La pipe 34 est terminée par une paroi courbée 35 déviant le mélange gazeux vers une ouverture supérieure 36 sur laquelle est appliquée la tête du brûleur. Cette tête comporte un corps de brûleur 17, un chapeau diffuseur 18 muni de bords 19 coiffant les orifices principaux de sortie de gaz 20. Le chapeau 18 comporte également des orifices de pilotage 21 assurant l'autopilotage du brûleur. Certains des orifices principaux 20 de sortie des gaz, régulièrement répartis, possèdent un chambrage de plus grand diamètre 23 de façon à éviter l'extinction qui risquerait de se produire lors d'un brusque passage du plein débit au débit réduit tout en conservant une bonne hygiène de la combustion. Par exemple le chambrage 23 est réalisé sur quatre orifices uniformément répartis; les flammes de ces quatre orifices étant maintenues, assurent le réallumage des autres orifices.

L'utilisation de ce type de brûleur à venturi horizontal permet d'obtenir de meilleurs résultats en débit très réduit qu'avec un brûleur à venturi vertical notamment dans le cas d'alimentation en gaz lourds, tels que butane, propane, leur forte densité constituant un handicap pour monter dans un brûleur à venturi vertical dans le cas de faible tirage consécutif au débit très réduit et à la faible pression.

Le chapeau de brûleur 18 dont la partie supérieure, bombée pour assurer l'écoulement des débordements éventuels de liquide, déborde de la surface cylindrique ou conique 24 comportant les orifices principaux de sortie de gaz 20, suffisamment pour assurer une diffusion de la chaleur en débit réduit au-delà de la couronne de flammes qui est alors de faible diamètre mais cependant pas de façon excessive pour qu'en débit maximal les flammes atteignent directement le fond du récipient afin d'obtenir un rendement satisfaisant.

L'efficacité du chapeau diffuseur est obtenue pour un rapport entre le diamètre extérieur $\varnothing_1$ et le diamètre intérieur $\varnothing_2$ de la chambre de mélange 25 compris entre 1,15 et 1,50 et une épaisseur e comprise entre 3 et 5 mm. Le diamètre des orifices principaux de sortie des gaz 20 est d'environ 2,5 mm. L'angle de perçage des orifices 20, dirigés vers le haut, est tel que la cote h soit comprise entre 1,5 et deux fois leur diamètre.

La matière constituant le chapeau diffuseur peut être soit un métal: alliage léger de préférence à base d'aluminium et de manganèse, laiton de décolletage ou matriçage, fonte, soit un matériau céramique réfractaire.

La figure 3 représente une variante du dispositif démultiplicateur dans laquelle le corps du bouton de manoeuvre 14 et le pignon denté 12 sont d'une seule pièce. Le bouton de manoeuvre 14, à commande démultipliée repose sur le carter 8 qui assure une commande non démultipliée. Le bouton 14 et le carter 8 sont de même diamètre. Le corps du bouton de manoeuvre 14 est creux et maintenu en place avec un léger jeu par un disque 30 dont le moyeu 31 est fixé à la platine 9 par sertissage ou tout autre procédé équivalent. La platine 9 porte de même les satellites 11.

Le disque 30 étant solidaire de l'axe du robinet, peut porter un index de positionnement de celui-ci et un obturateur transparent 32 serti ou collé peut comporter des graduations ou repères permettant ainsi un repérage très précis de la position de l'axe du robinet.

L'utilisation d'un dispositif de démultiplication avec un brûleur à très grande souplesse selon l'invention permet d'obtenir une bonne précision de réglage et d'assurer successivement la montée rapide à l'ébullition puis le mijotage d'une même préparation sans être obligés de passer à un brûleur de dimensions plus réduites.

**Revendications**

1. Dispositif de commande à gaz pour appareils de cuisson domestique comportant un dispositif de démultiplication (4) à commande manuelle agissant sur un robinet de brûleur (1) à grand angle de rotation et à variation de débit proche de la linéarité pour l'alimentation du brûleur (2) entre le débit maximal et le débit minimal, ledit dispositif de démultiplication comprenant une couronne fixe (5) à denture intérieure rendue solidaire du corps du robinet, une platine (9) solidaire de l'axe du robinet et supportant des satellites (11) coopérant d'une part avec la denture de la couronne fixe (5) et d'autre part avec un engrenage à pignon denté (12) solidaire de la manette de commande du brûleur, ledit dispositif de commande étant caractérisé par le fait que la platine (9) est solidarisée par l'intermédiaire des axes des satellites (11) à un carter (8) dont la paroi cylindrique est disposée à l'extérieur de la couronne (5) et permet une action non démultipliée sur le robinet.

2. Dispositif selon la revendication 1, caractérisé par le fait que la platine (9) supportant les satellites (11) est disposée dans une enceinte définie par le carter (8), mobile selon un mouvement non démultiplié, et la couronne fixe (5).

3. Dispositif selon l'une des revendications 1 et 2, caractérisé par le fait que le bouton de manoeuvre (14) à commande démultipliée repose sur le carter (8) assurant la commande non démultipliée.

4. Dispositif selon la revendication 3, caractérisé par le fait que le bouton de manoeuvre (14) comprend un obturateur transparent (32) permettant la vision d'un index solidaire du mouvement de rotation de l'axe du robinet et se déplaçant en regard de repères ou graduations portés par l'obturateur.

**Patentansprüche**

1. Steuervorrichtung für häusliche Gaskochgeräte mit einer handbedienten Untersetzungsvorrichtung (4), die auf einen Brennerhahn (1) mit großem Drehwinkel und einer nahezu linearen Veränderung des Durchsatzes für die Versorgung des Brenners (2) zwischen dem maximalen und dem minimalen Durchsatz einwirkt, wobei die Untersetzungsvorrichtung einen festen Kranz (5) mit innerer Verzahnung, die mit dem Körper des Hahns fest verbunden ist, und eine Platte (9) aufweist, die mit der Achse des Hahns fest verbunden ist und Satelliten (11) trägt, die einerseits mit der Verzahnung des festen Kranzes (5) und andererseits mit einem Zahnritzelgetriebe (12) zusammenwirkt, das mit dem Steuerhebel des Brenners fest verbunden ist, wobei die Steuervorrichtung dadurch gekennzeichnet ist, daß die Platte (9) über die Achsen der Satelliten (11) mit einem Gehäuse (8) fest verbunden ist, dessen zylindrische Wand außerhalb des Kranzes (5) angeordnet ist und eine nicht-untersetzte Einwirkung auf den Hahn ermöglicht.

2. Vorrichtung nach Anspruch 1, dadurch gekennzeichnet, daß die die Satelliten (11) tragende Platte (9) sich in einem vom Gehäuse (8), das entsprechend einer nicht-untersetzten Bewegung beweglich ist, und dem festen Kranz (5) definierten Bereich befindet.

3. Vorrichtung nach einem der Ansprüche 1 und 2, dadurch gekennzeichnet, daß der Betätigungsknopf (14) für die untersetzte Steuerung auf dem Gehäuse (8) ruht, das die nicht untersetzte Steuerung bewirkt.

4. Vorrichtung nach Anspruch 3, dadurch gekennzeichnet, daß der Bedienungsknopf (14) einen transparenten Verschluß (32) aufweist, der die Sicht auf einen Index freigibt, der mit der Rotationsbewegung der Achse des Hahns drehfest verbunden ist und sich in Bezug auf auf dem Verschluß angebrachte Markierungen oder Skalen bewegt.

**Claims**

1. A gas control device for domestic cooking apparatus comprising a demultiplication device (4) with manual control acting on a burner tap (1) with a large rotation angle and a nearly linear through-put variation für the supply of the burner (1) between the maximum through-put and the minimum through-put, said demultiplication device comprising a fixed crown (5), the interior gearing of which is rendered integral with the main part of the tap, and a plate (9) integral with the axis of the tap, and supporting satellites (11) which cooperate on the one hand with the gearing of the fixed crown (5) and on the other hand with a gearing of the cogged pinion (12) type integral with the control handle of the burner, said control device being characterized in that the plate (9) is fixed by means of the axes of the satellites (11) to a casing (8) the cylindrical wall of which is disposed on the exterior of the crown (5) and permits a not demultiplied action on the tap.

2. A device according to claim 1, characterized in that the plate (9) supporting the satellites (11) is disposed in an area defined by the casing (8), which is mobile according to a not demultipled movement, and by the fixed crown (5).

3. A device according to one of the claims 1 and 2, characterized in that the handling button (14) with demultiplied control rests on the casing (8) which ensures the not demultiplied control.

4. A device according to claim 3, characterized in that the handling button (14) comprises a transparent obturator (32) through which an index integral with the rotation movement of the tap axis ist visible and moves in regard of references or scales born by the obturator.

FIG.1

FIG.1A

FIG.1B

# FIG.2

# FIG.3